# EUROPEAN PATENT APPLICATION

(11) **EP 2 560 268 A2**
(43) Date of publication of application: **20.02.2013**
(21) Application number: 12176182.9
(22) Date of filing: 12.07.2012
(51) Int. Cl.: H02K 1/28

(54) **Rotor of rotating electric machine, rotating electric machine, and end face member of rotor**

(30) Priority: 19.08.2011 JP 2011179385
(71) Applicant: Kabushiki Kaisha Yaskawa Denki, Kitakyushu-Shi Fukuoka 806 (JP)
(72) Inventor: Funakoshi, Kenji, Kitakyushu-shi, Fukuoka 806-0004 (JP); Matsuura, Kenji, Kitakyushu-shi, Fukuoka 806-0004 (JP)
(74) Representative: Viering, Jentschura & Partner

(57) **Abstract**

A rotor (6) of a rotating electric machine (1), the rotating electric machine (1), and an end face member (63) of the rotor (6) are structured such that a rotor core (61) formed by stacking plates, a shaft (62) which is a rotating shaft, and an end ring (63) which is an end face member are provided. The shaft (62) extends through the rotor core (61). The end ring (63) includes a press-fitting portion (63a) to which the shaft (62) is press-fitted, and is attached, by means of the press-fitting portion (63a), to an end face of the rotor core (61) from which the shaft (62) projects.

## Description

### BACKGROUND OF THE INVENTION

### 1. Field of the Invention

The present invention relates to a rotor of a rotating electric machine, the rotating electric machine, and an end face member of the rotor.

### 2. Description of the Related Art

Rotors for use in rotating electric machines, such as motors and generators, are known. Such a rotor includes a cylindrical rotor core formed by stacking thin plate-shaped magnetic steel members and a rotating shaft that extends through the rotor core.

The rotor core has annular end rings attached to the end faces thereof (see, for example, Japanese Unexamined Patent Application Publication No. 2-307340). The end rings (hereinafter referred to also as "end face members") serve to increase the rigidity of the rotor core.

The end face members are generally fixed to the rotor core with screws or taper pins.

However, the rotor of the related art cannot be assembled with high working efficiency since the end face members are attached to the rotor core with screws or taper pins as described above.

### SUMMARY OF THE INVENTION

The disclosed technology has been developed in view of the above-described circumstances, and an object of the technology is to provide a rotor of a rotating electric machine, the rotating electric machine, and an end face member of the rotor that allow efficient rotor assembly.

A rotor of a rotating electric machine according to an aspect of the disclosed technology includes a rotor core formed by stacking plates, a rotating shaft that extends through the rotor core, and an end face member that includes a press-fitting portion to which the rotating shaft is press-fitted, the end face member being attached, by means of the press-fitting portion, to an end face of the rotor core from which the rotating shaft projects.

The rotor of a rotating electric machine according to the aspect of the disclosed technology allows efficient assembly thereof.

### BRIEF DESCRIPTION OF THE DRAWINGS

Fig. 1 is a vertical sectional view illustrating the structure of a rotating electric machine according to an embodiment;
Fig. 2A is an external view of an end ring according to the embodiment;
Fig. 2B is a front view of the end ring according to the embodiment;
Fig. 2C is a side view of the end ring according to the embodiment;
Fig. 2D is an enlarged view of part M1 in Fig. 2C;
Fig. 3 is a sectional view of a rotor core;
Fig. 4A is a front view illustrating the state in which the end ring is attached to an end face of the rotor core;
Fig. 4B is a side view illustrating the states before and after the attachment of the end ring;
Fig. 5A is a side view of an end ring according to a first modification;
Fig. 5B is an enlarged view of part M2 in Fig. 5A;
Fig. 6 is a front view of an end ring according to a second modification;
Fig. 7A is a front view of an end ring according to a third modification;
Fig. 7B is a side view of the end ring according to the third modification; and
Fig. 8 is a diagram illustrating the manner in which an end ring is fitted to a shaft according to a fourth modification.

### DESCRIPTION OF THE PREFERRED EMBODIMENTS

A rotor of a rotating electric machine, the rotating electric machine, and an end face member of the rotor according to an embodiment of the disclosed technology will now be described in detail with reference to the drawings. The present invention is not restricted to the embodiment described hereinafter.

### Embodiment

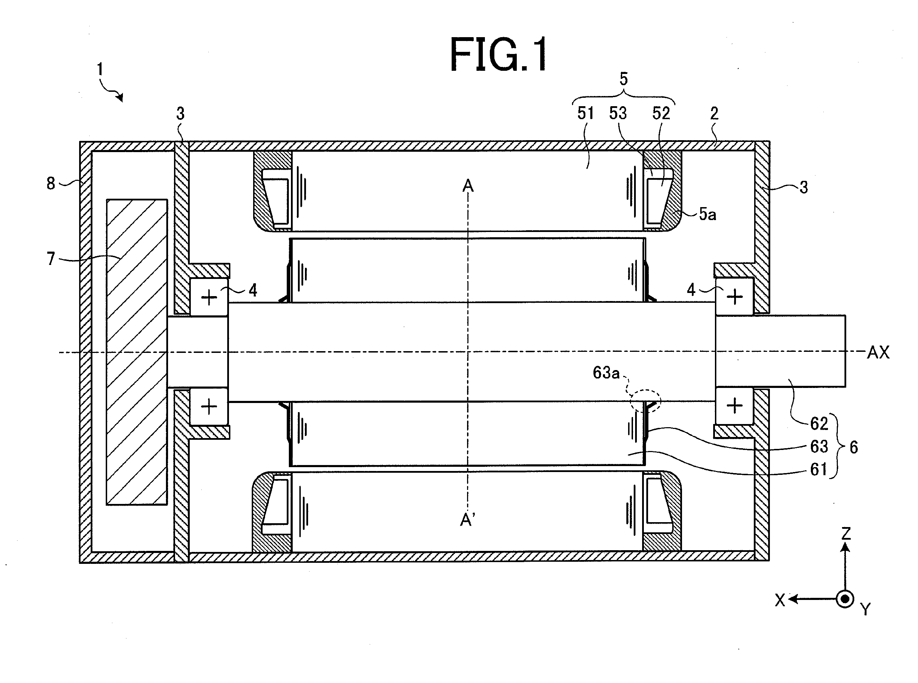

First, the structure of a rotating electric machine according to the embodiment will be described with reference to Fig. 1. Fig. 1 is a vertical sectional view illustrating the structure of a rotating electric machine 1 according to the embodiment. To facilitate understanding, a three-dimensional rectangular coordinate system including a Z axis, the positive direction of which is in the vertically upward direction, is illustrated in Fig. 1. The rectangular coordinate system may also appear in other figures that are referred to in the following description.

Components of which the number is more than one may be drawn such that only one of them is denoted by a reference numeral while the remaining components are drawn without reference numerals. In such a case, it is to be assumed that the components have a similar structure.

As illustrated in Fig. 1, the rotating electric machine 1 according to the embodiment includes a frame 2, brackets 3, bearings 4, a stator 5, a rotor 6, a detector 7, and a cover 8.

The frame 2 has a cylindrical shape, and the outer periphery of the stator 5 is fixed to the inner peripheral surface of the frame 2. The brackets 3 are substantially disc-shaped. Outer peripheral portions of the brackets 3 are attached to open ends of the frame 2, and inner peripheral portions of the brackets 3 retain the bearings 4.

The stator 5 includes a stator core 51, coils 52, and bobbins 53. The stator core 51 is formed by stacking a plurality of thin plate-shaped magnetic steel members (magnetic steel plates). In the following description, the magnetic steel plates may be referred to simply as "plates".

The stator core 51 is fixed to the inner peripheral surface of the frame 2 by, for example, shrinkage fitting while the bobbins 53, around which the coils 52 are wound, are attached to the stator core 51. The stator core 51, the coils 52, and the bobbins 53 are molded by using a molding resin 5a.

The rotor 6 faces the inner peripheral surface of the stator 5 with a predetermined gap therebetween. The rotor 6 includes a rotor core 61, a shaft 62, and end rings 63.

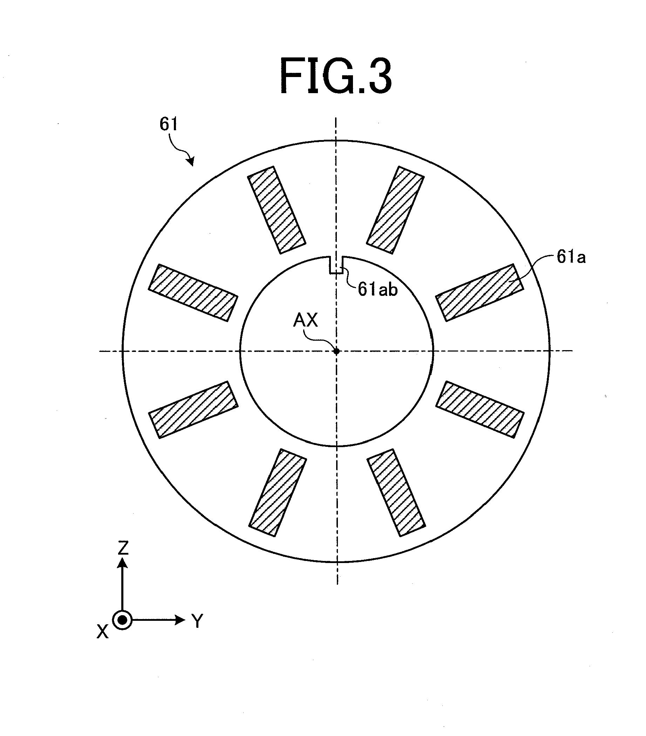

The rotor core 61 is formed in a cylindrical shape by stacking a plurality of thin plate-shaped magnetic steel members (magnetic steel plates). The magnetic steel members that are stacked together are joined together by, for example, crimping. Field permanent magnets (not shown), for example, are embedded in the rotor core 61. This will be described below with reference to Fig. 3.

The shaft 62 is a rotating shaft of the rotor 6, and extends through the rotor core 61 in the X direction in Fig. 1. The outer peripheral surface of the shaft 62 is fixed to the inner peripheral surface of the rotor core 61 by, for example, shrinkage fitting.

Alternatively, the shaft 62 may have an outer diameter that is smaller than the inner diameter of the rotor core 61, and be fixed with an adhesive to the rotor core 61 after being inserted through the rotor core 61. In this case, a gap is formed between the outer peripheral surface of the shaft 62 and the inner peripheral surface of the rotor core 61, and the gap is filled with the adhesive. In this case, the rotor core 61 can be positioned by the end rings 63 described below.

Alternatively, the shaft 62 may have an outer diameter that is smaller than the inner diameter of the rotor core 61, and be fixed to the rotor core 61 only by the end rings 63 after being inserted through the rotor core 61. In this case, a gap is formed between the outer peripheral surface of the shaft 62 and the inner peripheral surface of the rotor core 61. However, the end rings 63 serve not only to position the rotor core 61 but also to fix the shaft 62 to the rotor core 61.

The end rings 63 are end face members attached to the end faces of the rotor core 61. Each end ring 63 includes press-fitting portions 63a to which the shaft 62 is press-fitted. Each end ring 63 is attached to an end face of the rotor core 61 and fixed to the shaft 62 by means of the press-fitting portions 63a.

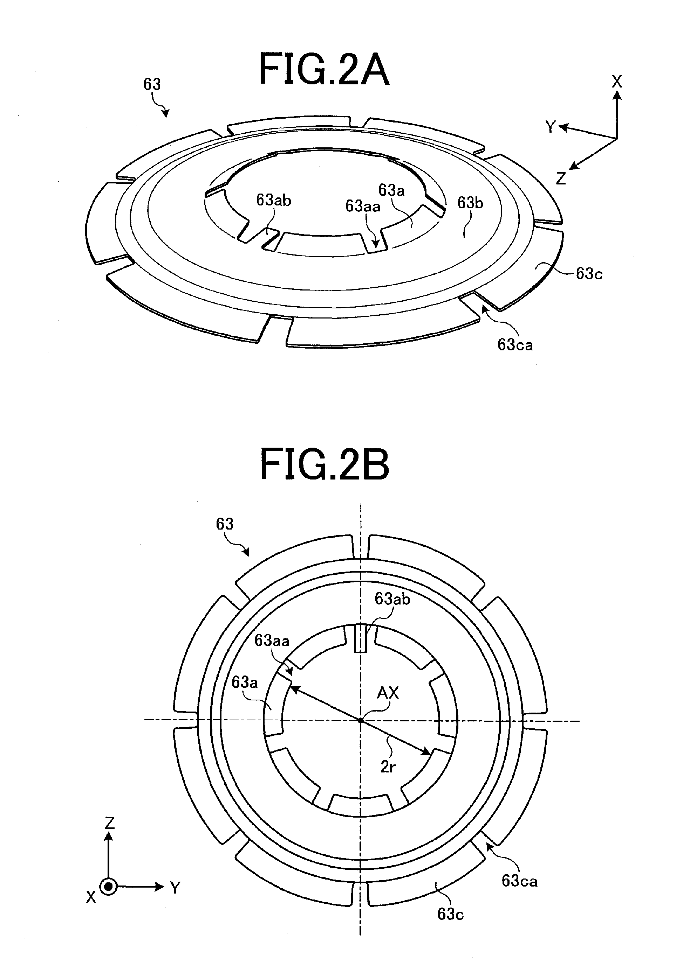

Thus, the attachment of the end rings 63 can be achieved without using screws or taper pins, and it is not necessary to form holes for receiving the screws or taper pins in the rotor core 61. As a result, the assembly cost can be reduced and the assembly efficiency can be increased. The end rings 63 will be described in detail below with reference to Fig. 2A and the following figures.

The shaft 62 is supported by the bearings 4 in a manner such that the axial center of the shaft 62 coincides with the central axis AX of the frame 2. In other words, the rotor 6, which includes the shaft 62, is supported such that the rotor 6 is rotatable around the central axis AX.

A load, such as an external device (not shown), is connected to a load-side end of the shaft 62. The detector 7 is connected to the other end, which is a non-load-side end, of the shaft 62.

The detector 7 detects the rotational position of the shaft 62. The detector 7 is, for example, a rotary encoder or a resolver. The result of the detection performed by the detector 7 is output to a predetermined controller (not shown). The detector 7 is covered by the cover 8.

The rotating electric machine 1 according to the embodiment may be used as a motor or a generator. When, for example, the rotating electric machine 1 is used as a motor, a current is applied to the coils 52 in the stator 5, so that a rotating magnetic field is generated inside the stator 5.

Then, the rotor 6 rotates as a result of an interaction between the rotating magnetic field and a magnetic field generated by the permanent magnets in the rotor 6. The shaft 62 rotates when the rotor 6 rotates.

When the rotating electric machine 1 is used as a generator, the rotating electric machine 1 operates in a manner opposite to that in the case of being used as a motor. More specifically, the rotor 6 rotates when the shaft 62 rotates, thereby generating a current that flows through the coils 52 in the stator 5.

A sectional view of Fig. 1 taken along line A-A' will be described below with reference to Fig. 3.

The end rings 63 according to the embodiment described above with reference to Fig. 1 will now be mainly described. First, the structure of each end ring 63 according to the embodiment will be described with reference to Figs. 2A to 2D.

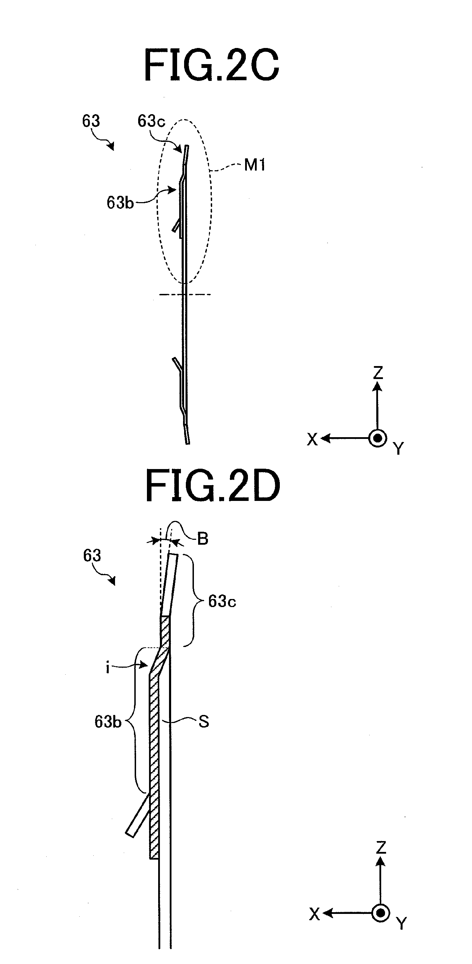

Fig. 2A is an external view of one of the end rings 63 according to the embodiment. Fig. 2B is a front view of the end ring 63 according to the embodiment. Figs. 2C and 2D are side views of the end ring 63 according to the embodiment. Fig. 2D is an enlarged view of part M1 in Fig. 2C.

In the following description, the end ring 63 at the non-load side (that is, the detector-7 side) in Fig. 1 will be explained as an example. However, the explanation similarly applies to the end ring 63 at the load side. When the following explanation is applied to the end ring 63 at the load side, it is to be assumed that the positive and negative directions along the X-axis are opposite to those in the following explanation.

As illustrated in Fig. 2A, the end ring 63 is an annular member and includes the press-fitting portions 63a, an intermediate portion 63b, and outer peripheral portions 63c. The press-fitting portions 63a are connected to the intermediate portion 63b, and the intermediate portion 63b is connected to the outer peripheral portions 63c. Thus, the end ring 63 can be formed from a single plate by pressforming. The hole formed at the center of the end ring 63 is hereinafter referred to as a "press-fitting hole".

As illustrated in Figs. 2A and 2B, the press-fitting portions 63a may be formed by dividing an inner peripheral portion of the end ring 63 into a plurality of segments with a plurality of cut portions 63aa. The press-fitting portions 63a are inclined toward the positive side of the X-axis at a predetermined inclination. The inclination determines the insertion direction of the shaft 62 (see Fig. 1). The shaft 62 is inserted through the press-fitting hole in the direction from the negative side toward the positive side of the X-axis.

As illustrated in Fig. 2B, the inclination is set so that the diameter 2r of a circle formed by the ends of the press-fitting portions 63a and centered on the central axis AX is smaller than the diameter of the shaft 62. Therefore, the shaft 62 is "press-fitted" when the shaft 62 is inserted though the press-fitting hole.

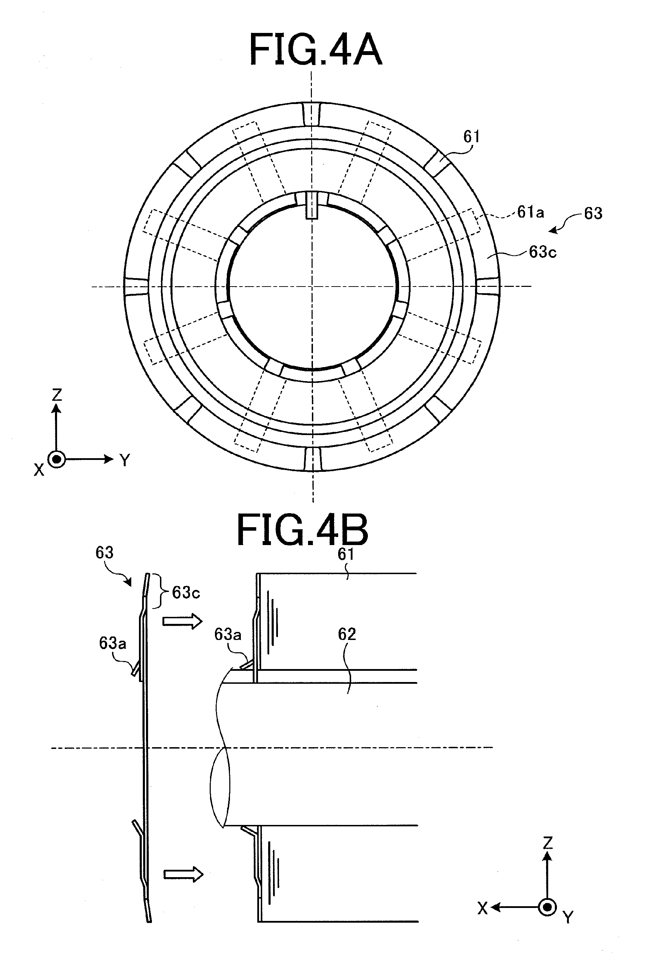

More specifically, the press-fitting portions 63a are elastically deformed by the load applied when the shaft 62 is press-fitted, so that the end ring 63 is fixed to the shaft 62 by the restoring force against the elastic deformation. This will be further described below with reference to Fig. 4B.

The press-fitting portions 63a, which are divided from each other, apply the restoring force toward the central axis AX in multiple directions. Therefore, the end ring 63 can be rigidly and stably fixed to the shaft 62.

Fig. 2B illustrates an example in which seven press-fitting portions 63a are provided. However, the number of press-fitting portions 63a is not particularly limited to this.

As illustrated in Figs. 2A and 2B, the inner peripheral portion of the end ring 63 may further include a key 63ab. The key 63ab is a fitting lug that can be fitted in a key groove (not shown), which is an axial groove, formed in the shaft 62 along the axial direction.

The key 63ab is fitted in the key groove when the shaft 62 is press-fitted in the press-fitting hole. Thus, the shaft 62 and the end ring 63 are prevented from being displaced from each other in the rotation direction.

As illustrated in Figs. 2C and 2D, the intermediate portion 63b may include a predetermined inclined part i, and be recessed along the radial direction in a direction away from the contact surface that is in contact with the end face of the rotor core 61 (see Fig. 1).

Accordingly, when the end ring 63 is attached to the end face of the rotor core 61, a space S is formed between the end ring 63 and the end face. Therefore, crimping projections, for example, on the end face may be placed in the space S.

As illustrated in Figs. 2A and 2B, the outer peripheral portions 63c may be formed by dividing the outer peripheral portion of the end ring 63 into a plurality of segments with a plurality of cut portions 63ca. When the end ring 63 is attached to the end face of the rotor core 61, the outer peripheral portions 63c come into contact with the end face and press the end face.

As illustrated in Figs. 2C and 2D, each outer peripheral portion 63c may have a bent part B that is bent toward a side at which the outer peripheral portion 63c is in contact with the end face of the rotor core 61. Therefore, when the end ring 63 is attached to the end face of the rotor core 61, the end ring 63 presses, in particular, the outer periphery of the end face of the rotor core 61, where "curling" and "tilting" of the stacked plates easily occur. As a result, the "curling" and "tilting" can be prevented and the rigidity of the rotor core 61 can be ensured.

Referring Fig. 2B, the plurality of outer peripheral portions 63c press the outer periphery of the end face of the rotor core 61 at respective positions in multiple radial directions around the central axis AX. Therefore, even when the above-described "curling" and "tilting" are not uniform, the outer peripheral portions 63c individually prevent the "curling" and "tilting" to ensure the rigidity of the rotor core 61.

Fig. 2B illustrates an example in which eight outer peripheral portions 63c are provided. However, the number of outer peripheral portions 63c is not limited to this.

The above-described cut portions 63aa and 63ca may be used as spaces for receiving balancing putty that is used to adjust the overall balance of the rotor 6.

The structure of the rotor core 61 will now be described. Fig. 3 is a cross sectional view of the rotor core 61. Fig. 3 corresponds to a sectional view of Fig. 1 taken along line A-A'.

As illustrated in Fig. 3, when viewed from the positive side of the X-axis, the rotor core 61 has an annular shape and an inner peripheral portion of the rotor core 61 includes a key 61ab. Similar to the above-described key 63ab (see Fig. 2B) of the end ring 63, the key 61ab is a fitting lug that can be fitted in a key groove (not shown), which is an axial groove, formed in the shaft 62 along the axial direction.

As illustrated in Fig. 3, a plurality of permanent magnets 61a are arranged in the rotor core 61 along the circumferential direction. Each permanent magnet 61a continuously extends in the X-direction, which is the stacking direction of the plates in the rotor core 61. Thus, each permanent magnet 61a is embedded in the rotor core 61 so as to extend along the stacking direction of the plates in the rotor core 61.

Although Fig. 3 illustrates an example in which the permanent magnets 61a are arranged radially around the central axis AX, the arrangement direction of the permanent magnets 61a is not limited to this. In addition, although Fig. 3 illustrates an example in which the permanent magnets 61a are embedded in the rotor core 61, the arrangement positions of the permanent magnets 61a are not limited to this.

In addition, although Fig. 3 illustrates an example in which the permanent magnets 61a have a rectangular shape when viewed from the positive side of the X-axis, the shape of the permanent magnets 61a is not limited to this.

Next, the state in which each end ring 63 is attached to an end face of the rotor core 61 will be described with reference to Figs. 4A and 4B. Fig. 4A is a front view illustrating the state in which one of the end rings 63 is attached to an end face of the rotor core 61. Fig. 4B is a side view illustrating the states before and after the attachment of the end ring 63.

As illustrated in Fig. 4A, the end face of the rotor core 61 and the end ring 63 have substantially the same size. Therefore, as illustrated in Fig. 4A, when the end ring 63 is attached to the end face of the rotor core 61, the end face of the rotor core 61 is covered by the end ring 63.

Thus, the permanent magnets 61a are prevented from projecting from the end face of the rotor core 61 owing to, for example, a centrifugal force when the rotor core 61 is rotated. This effect can be enhanced when the permanent magnets 61a are arranged in one-to-one correspondence with the outer peripheral portions 63c, which are divided from each other, as illustrated in Fig. 4A.

As illustrated in Fig. 4B, when the end ring 63 is attached to the end face of the rotor core 61, the press-fitting portions 63a are elastically deformed so as to warp by a larger amount compared to the state before the attachment.

The press-fitting portions 63a fix the end ring 63 to the shaft 62 with the restoring force against the elastic deformation.

As illustrated in Fig. 4B, the end ring 63 is preferably secured at a position where the end ring 63 can press the rotor core 61 with a force strong enough to cause the bent parts of the outer peripheral portions 63c to warp by being pushed by the outer periphery of the end face of the rotor core 61 in the X-axis direction.

Since the rotor core 61 is sandwiched from both the load side and the non-load side with the above-described pressing force, not only can the above-described "curling" and "tilting" be prevented, but also the overall shape of the rotor core 61 can be adjusted.

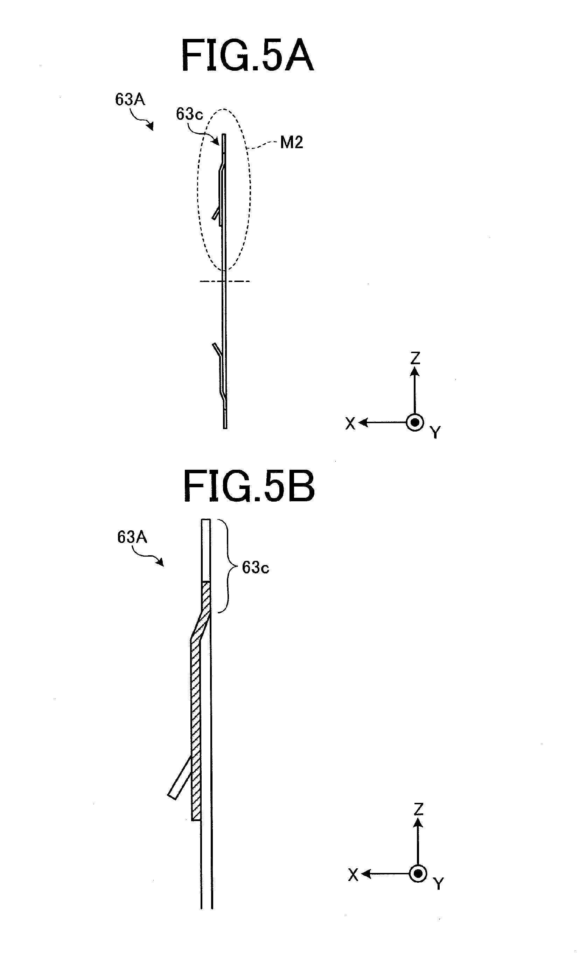

Although the outer peripheral portions 63c of the end ring 63 according to the above-described embodiment have predetermined bent parts, the structure of the end ring 63 is not limited to this. A modification with regard to this point will be described with reference to Figs. 5A and 5B as a first modification.

Figs. 5A and 5B are side views of an end ring 63A according to the first modification. Fig. 5B is an enlarged view of part M2 in Fig. 5A.

As illustrated in Figs. 5A and 5B, the end ring 63A may include outer peripheral portions 63c that are free from the bent parts and have a flat shape. Also in this case, the entire area of the portion in contact with the outer peripheral portions 63c, the portion including the outer periphery of the end face of the rotor core 61 (see Fig. 1), can be uniformly pressed. Therefore, the above-described "curling" and "tilting" can be prevented.

Since it is not necessary to form the bent parts on the outer peripheral portions 63c, the end ring 63A can be easily formed.

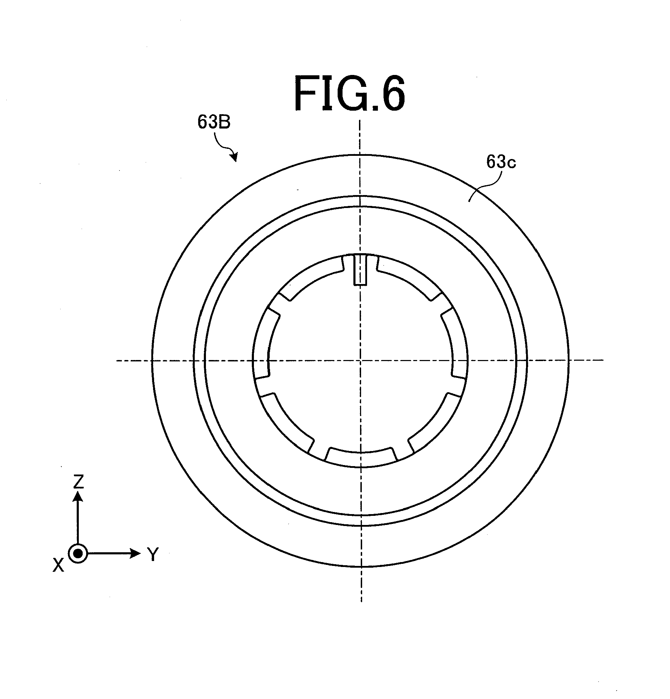

Although the end ring 63 includes the outer peripheral portions 63c that are divided from each other in the above-described embodiment, the structure of the end ring 63 is not limited to this. A modification with regard to this point will be described with reference to Fig. 6 as a second modification.

Fig. 6 is a side view of an end ring 63B according to the second modification. As illustrated in Fig. 6, the end ring 63B may include an outer peripheral portion 63c that has an integral structure and is not divided into segments.

Also in this case, the entire area of the portion in contact with the outer peripheral portion 63c can be uniformly pressed in the X-axis direction. This modification is effective in the case where, for example, uniform curling tends to occur at the outer periphery of the end face of the rotor core 61.

Since it is not necessary to form the cut portions 63ca (see Fig. 2B) in the outer peripheral portion 63c, the end ring 63B can be easily formed.

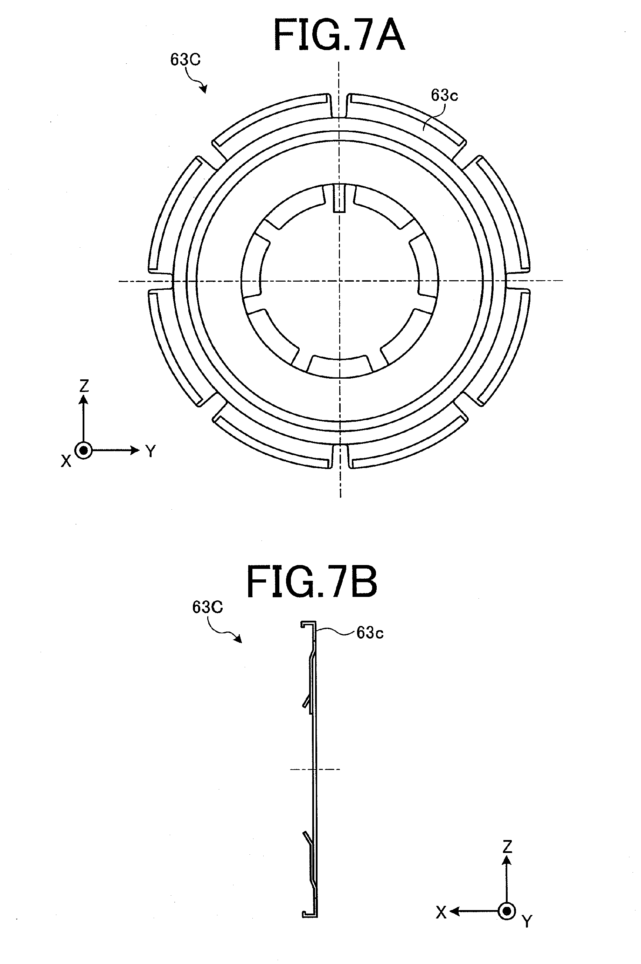

Although the outer peripheral portions 63c of the end ring 63 according to the above-described embodiment include the predetermined bent parts, the outer peripheral portions 63c may instead include folded parts that are folded in a direction opposite to the direction in which the bent parts are bent. A modification with regard to this point will be described with reference to Figs. 7A and 7B as a third modification.

Fig. 7A is a front view of an end ring 63C according to the third embodiment, and Fig. 7B is a side view of the end ring 63C according to the third embodiment.

As illustrated in Figs. 7A and 7B, the end ring 63C include outer peripheral portions 63c including folded parts that are folded in a direction away from the side at which the end ring 63C is in contact with the end face of the rotor core 61.

When the folded parts are provided, the above-described balancing putty, for example, is prevented from scattering in the frame 2 (see Fig. 1) of the rotating electric machine 1 owing to centrifugal force or the like caused by the rotation. In other words, failure of the rotating electric machine 1 due to scattering of the balancing putty can be prevented. The folded parts also serve to increase the rigidity of the end ring 63C.

In addition, in the above-described case, the inner peripheral portion of the end ring 63 according to the embodiment includes the key 63ab (see Fig. 2B), which is fitted in the key groove formed in the shaft 62 along the axial direction. However, a circumferential groove that extends in the circumferential direction of the shaft 62 may be formed as a key groove for receiving a key that extends in the circumferential direction.

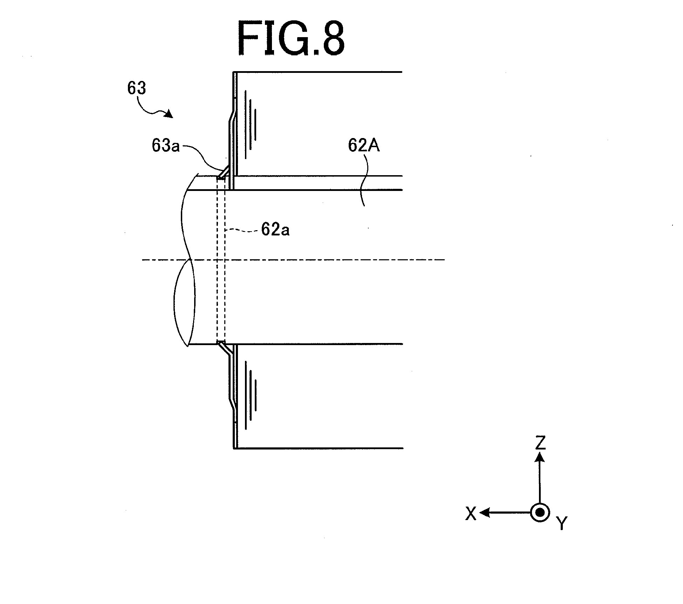

A modification with regard to this point will be described with reference to Fig. 8 as a fourth modification. Fig. 8 illustrates the manner in which an end ring 63 is fitted to a shaft 62A according to a fourth modification.

As illustrated in Fig. 8, the shaft 62A according to the fourth modification may have a key groove 62a, which is a circumferential groove that extends in the circumferential direction, in the outer peripheral surface thereof. End portions of the press-fitting portions 63a are fitted into the key groove 62a when the end ring 63 is attached to the end face of the rotor core 61. The end portions of the press-fitting portions 63a serve as fitting lugs that are fitted in the key groove 62a.

When the end portions of the press-fitting portions 63a are fitted in the key groove 62a, the end ring 63 and the shaft 62A are prevented from being displaced from each other in the X-axis direction. Therefore, the end ring 63 is capable of constantly pressing the end surface of the rotor core 61 at a predetermined pressing force. In other words, the rigidity of the rotor core 61 can be reliably ensured.

As described above, a rotor of a rotating electric machine according to the embodiment includes a rotor core formed by stacking plates, a shaft which is a rotating shaft, and an end ring which is an end face member. The shaft extends through the rotor core. The end ring includes a press-fitting portion to which the shaft is press-fitted, and is attached, by means of the press-fitting portion, to an end face of the rotor core from which the shaft projects.

Therefore, according to the rotor of the rotating electric machine, the rotating electric machine including the rotor, and the end face member of the rotor according to the embodiment, the assembly efficiency can be increased.

Although the shapes, for example, of the components of the rotor have been explained in the above-described embodiment and modifications, these shapes may be applied in combination as appropriate.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

It should be understood by those skilled in the art that various modifications, combinations, sub-combinations and alterations may occur depending on design requirements and other factors insofar as they are within the scope of the appended claims or the equivalents thereof.

## Claims

1. An end face member (63) for a rotor (6) of a rotating electric machine (1), the end face member includes a press-fitting portion (63a) to which a rotating shaft (62) of the rotor (6) is press-fitted, the end face member (63) being attached, by means of the press-fitting portion (63a), to an end face of a rotor core (61) of the rotor (6) from which the rotating shaft (62) projects.

2. A rotor (6) of a rotating electric machine (1), **characterized by** comprising:
a rotor core (61) formed by stacking plates;
a rotating shaft (62) that extends through the rotor core (61); and
the end face member (63) according to claim 1.

3. The rotor (6) according to Claim 2,
wherein the end face member (63) includes an outer peripheral portion (63c) having a bent part that is bent toward a side at which the end face member (63) is in contact with the end face.

4. The rotor (6) according to Claim 2,
wherein the end face member (63) includes an outer peripheral portion (63c) having a folded part that is folded in a direction away from a side at which the end face member (63) is in contact with the end face.

5. The rotor (6) according any one of Claims 2 to 4, wherein the end face member (63) includes an outer peripheral portion (63c) that is divided into a plurality of segments.

6. The rotor (6) according any one of Claims 2 to 5, wherein the end face member (63) includes a recessed portion that is recessed in a direction away from a side at which the end face member (63) is in contact with the end face, the recessed portion being located between the outer peripheral portion (63c) and the press-fitting portion (63a) in a radial direction.

7. The rotor (6) according any one of Claims 2 to 6, wherein the rotating shaft (62) includes an axial groove in an outer peripheral surface thereof, the axial groove extending along an axial direction of the rotating shaft (62), and
wherein the press-fitting portion (63a) includes a fitting lug (63ab) that is fitted in the axial groove.

8. The rotor (6) according any one of Claims 2 to 7, wherein the rotating shaft (62) includes a circumferential groove (62a) in an outer peripheral surface thereof, the circumferential groove extending along a circumferential direction of the rotating shaft (62), and
wherein the press-fitting portion (63a) includes a fitting lug that is fitted in the circumferential groove.

9. The rotor (6) according any one of Claims 2 to 8, wherein the press-fitting portion (63a) is divided into a plurality of segments.

10. A rotating electric machine (1) **characterized by** comprising:
the rotor (6) according any one of Claims 1 to 9.
